(19) **Europäisches Patentamt**

**European Patent Office**

**Office européen des brevets**

(11) **EP 0 836 076 B1**

(12) # FASCICULE DE BREVET EUROPEEN

(45) Date de publication et mention
de la délivrance du brevet:
**22.05.2002   Bulletin 2002/21**

(51) Int Cl.⁷: **G01D 5/241**

(21) Numéro de dépôt: **96810686.4**

(22) Date de dépôt: **11.10.1996**

(54) **Dispositif de mesure de dimension capacitif**

Kapazitive Dimensionsmesseinrichtung

Capacitive dimension measuring device

(84) Etats contractants désignés:
**CH DE FR GB LI**

(43) Date de publication de la demande:
**15.04.1998   Bulletin 1998/16**

(73) Titulaire: **Brown & Sharpe Tesa S.A.**
**1020 Renens (CH)**

(72) Inventeur: **Jordil, Pascal**
**1612 Ecoteaux (CH)**

(74) Mandataire: **BOVARD AG - Patentanwälte**
**Optingenstrasse 16**
**3000 Bern 25 (CH)**

(56) Documents cités:
**EP-A- 0 421 131      EP-A- 0 543 421**
**EP-A- 0 622 612      DE-A- 3 438 234**
**DE-A- 3 740 544**

## Description

La présente invention concerne un dispositif de mesure de dimension capacitif selon le préambule de la revendication 1.

De tels dispositifs de mesure capacitifs sont utilisés dans des instruments de mesure de précision, par exemple dans des calibres ou dans des colonnes de mesure de hauteur. Ils comportent généralement une règle et un capteur tous deux munis d'électrodes. Le couplage capacitif entre les différentes électrodes se modifie lorsque le capteur se déplace en face de la règle. La valeur de ce couplage ou son évolution est évaluée et permet de déterminer la position du capteur.

La position pourrait déjà être déterminée avec une seule électrode sur le capteur se déplaçant face à une seule électrode sur la règle. Lorsque les deux électrodes se superposent parfaitement, le couplage capacitif est maximal. Si le capteur se déplace, ce couplage diminue. Le déplacement du capteur peut donc être déterminé en mesurant ce couplage.

Pour augmenter la résolution et afin de rendre le système moins sensible aux erreurs de positionnement notamment, on préfère généralement utiliser des réseaux formés de plusieurs électrodes aussi bien sur la règle que sur le capteur. Selon la configuration adoptée, la plupart de ces dispositifs peuvent être regroupés en deux types principaux.

Le premier type principal concerne les systèmes dits à injection multiple et réception simple. Le document de brevet EP0184584 (Mauser Werke Oberndorf) décrit un système de ce type. Dans ce système, le capteur comporte trois groupes d'électrodes d'émission qui reçoivent des signaux alternatifs déphasés mutuellement de 120°, par exemple des signaux sinusoïdaux. Ces signaux sont transmis capacitivement aux électrodes de règle, puis en retour à deux électrodes de réception sur le capteur. Le signal obtenu sur ces deux électrodes est ensuite converti par des moyens d'analyse en un résultat indiquant le déplacement du capteur.

Les documents de brevet US4743902 (Andermo), US4878013 (Andermo), US4449179 (Meyer) et US4437055 (Meyer) décrivent des variantes de systèmes à injection multiple de N signaux et réception simple sur une ou deux électrodes.

Ces dispositifs nécessitent la génération de N signaux, par exemple de N signaux sinusoïdaux déphasés. La précision de mesure dépend généralement de la précision du déphasage entre les N signaux obtenus. Si N est important, et selon la forme des signaux désirée, la réalisation du générateur de N signaux est critique et nécessite une surface de circuit intégré importante.

Le document DE A-3438234 est relatif à un dispositif de mesure de dimension capacitif comprenant:

une règle munie d'un réseau d'électrodes de règles, arrangées sensiblement parallèlement, les unes à côté des autres,

un capteur apte à se déplacer parallèlement face à la règle et muni de deux électrodes d'émission et de n électrodes de réception, lesdites électrodes de règle étant chacune couplée capacitivement à l'une des deux électrodes d'émission, ledit réseau d'électrodes de règle étant de plus conformé de manière à ce qu'une partie dudit réseau soit face auxdites électrodes de réception de manière à ce que chacune desdites électrodes de réception soit couplée capacitivement avec au moins une des électrodes de règle, le couplage entre les électrodes de règle et les électrodes de réception dépendant de la position du capteur,

les n électrodes de réception étant reliées électriquement de manière à former N groupes d'électrodes reliées entre elles, N étant un entier supérieur ou égal à deux,

un générateur injectant deux signaux d'émission en opposition de phase sur les deux électrodes d'émission,

des moyens d'analyse déterminant à l'aide de signaux reçus sur lesdits N groupes d'électrodes de réception un résultat numérique représentatif de la position du capteur le long de la règle.

Le dispositif comprend des électrodes de règle qui, voisines selon la direction transversale de ladite règle, sont couplées à des électrodes d'émission différentes.

La présente invention concerne une amélioration aux dispositifs de mesure capacitif de ce type.

Le dispositif de l'invention diffère de manière subtile mais fondamentale de celui du document précité, et ce, en ce sens que :

dans ladite partie du réseau d'électrodes de règle qui fait face aux électrodes de réception, deux électrodes voisines selon la direction longitudinale de la règle sont couplées à deux électrodes d'émission différentes.

D'autres caractéristiques avantageuses ressortent en outre des revendications dépendantes.

Grâce à ces caractéristiques, l'invention permet d'obtenir une résolution et une précision élevée et un système peu sensible aux erreurs de positionnement mécaniques. En outre, l'invention permet d'obtenir ces avantages avec un dispositif de construction simplifiée, notamment pour ce qui est du générateur de signaux injectés, et dont la consommation électrique est minimale.

Seuls des signaux différentiels sont injectés sur le capteur. Il n'a donc pas besoin de connexion avec la masse. Dans l'art antérieur, ces connexions devaient être réalisées avec un soin particulier et nécessitaient une surface de circuit imprimé importante. L'invention permet donc de simplifier la fabrication et le montage du capteur.

L'utilisation d'un système de mesure différentiel permet en outre de réduire la sensibilité aux perturbations, notamment aux perturbations électriques et électromagnétiques.

L'invention sera mieux comprise à l'aide de la description d'un exemple de réalisation préférentiel illustré par les figures annexées, dans lesquelles:

La figure 1 est un schéma d'ensemble du dispositif de l'invention incorporant un circuit de contrôle intégré.

La figure 2A est une vue de dessus sur les électrodes de la règle.

La figure 2B est une vue de dessus sur les électrodes du capteur.

La figure 3 est un diagramme illustrant le signal reçu sur les différentes électrodes de réception en fonction de la position du capteur.

La figure 4 est un tableau indiquant la zone dans laquelle se trouve le capteur en fonction des résultats d'une comparaison des signaux sur les électrodes de réception.

La figure 5 illustre en superposition le signal reçu sur les différentes électrodes de réception en fonction de la position du capteur.

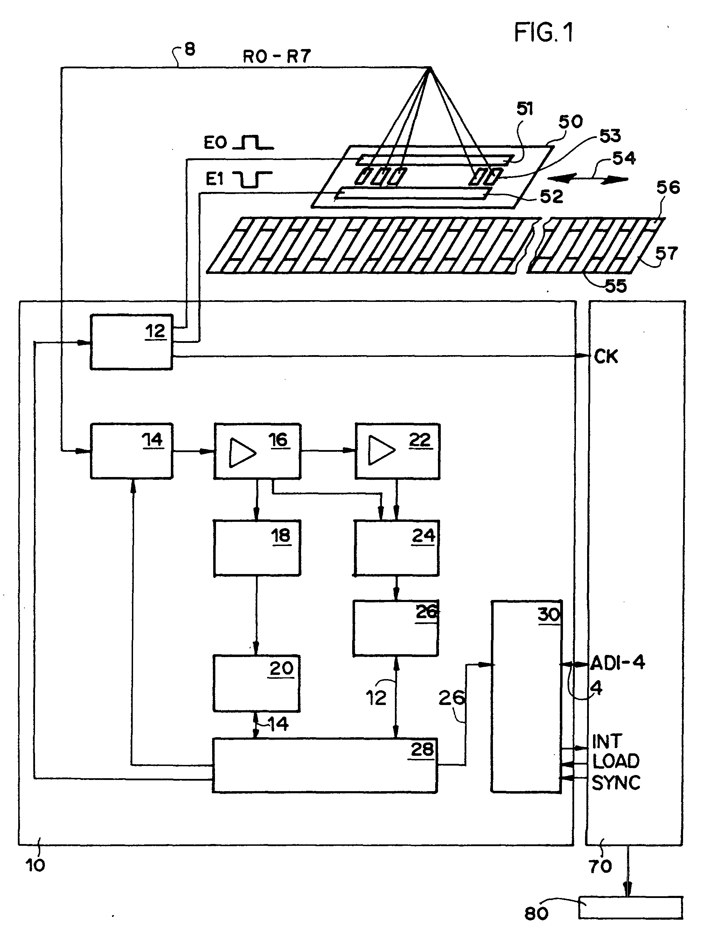

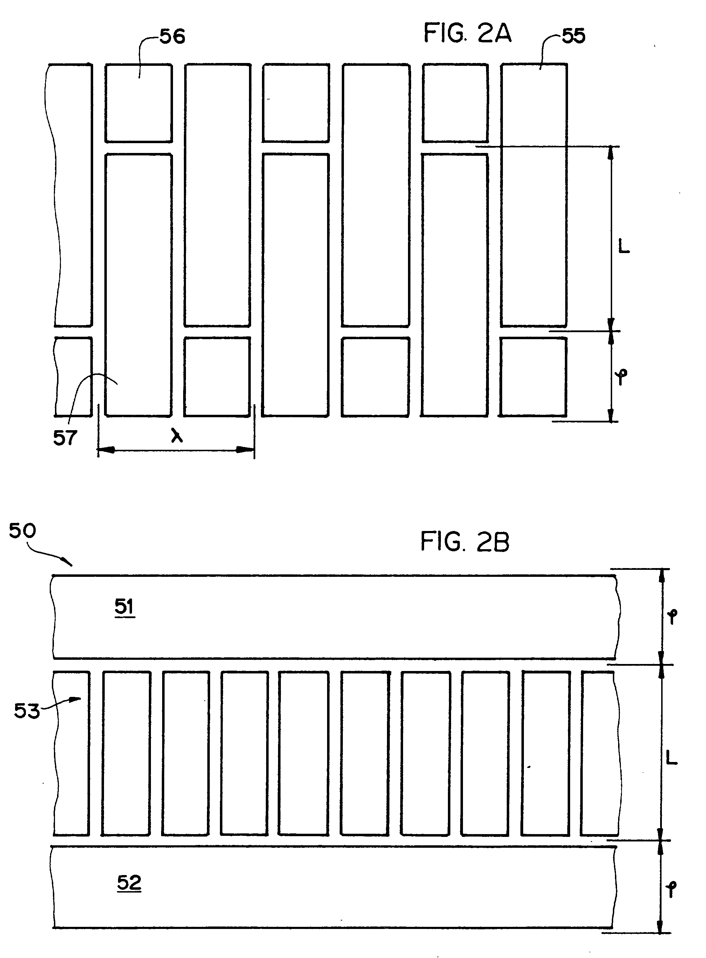

La figure 1 représente un schéma-bloc de l'ensemble du dispositif de l'invention. Il comporte un capteur capacitif 50 apte à se déplacer au-dessus d'une règle capacitive 55. La règle est munie d'un réseau d'électrodes de règle parallèles 56 et 57 (figure 2A). La disposition des électrodes de règle adoptée dans cet exemple est en i. Chaque segment de règle de longueur lambda est muni de 2 électrodes courtes 56 et de deux électrodes longues 57. La longueur des électrodes 57 vaut L tandis que la longueur des électrodes 56 vaut I. La largeur des deux types d'électrodes est légèrement inférieure à lambda / 2. Les électrodes courtes sont disposées alternativement au-dessus puis au-dessous des électrodes longues, comme illustré. Les électrodes de règle sont flottantes et isolées les unes des autres. Elles sont par exemple déposées par métallisation sur un substrat en verre ou PCB. Dans une variante, la règle pourrait aussi être réalisée avec la technique de fabrication des circuits imprimés.

D'autres dispositions des électrodes de règle, par exemple une disposition en T comme décrite dans EP0184584 ou une disposition en L, peuvent aussi être adoptées.

Le capteur capacitif comporte deux électrodes d'émission 51 et 52 et une série d'électrodes de réception 53 (figure 2B). Les électrodes d'émission 51, 52 s'étendent de chaque côté sur une zone au moins aussi longue que celle occupée par le réseau d'électrodes de réception parallèles 53. La largeur des électrodes d'émission 51, 52 vaut I tandis que celle des électrodes de réception 53 vaut L.

Les n électrodes de réception 53 sont reliées électriquement entre elles au dos du capteur de manière à former N groupes d'électrodes, dans cet exemple 8 groupes R0 à R7. Un groupe d'électrodes est formé de plusieurs électrodes occupant des positions telles que toutes les électrodes du groupe reçoivent des signaux de phase identique quelle que soit la position du capteur au-dessus de la règle. Sur la figure 2B, les électrodes 53 successives appartiennent respectivement aux groupes 0, 1, 2, 3, 4, 5, 6, 7, 0, 1, 2, 3, 4, 5, 6, 7 et ainsi de suite. Une succession identique d'électrodes se répète donc périodiquement. Toutefois, d'autres dispositions plus sophistiquées peuvent aussi être adoptées, par exemple une répartition en groupe du type décrit dans le brevet US4878013 (Andermo) ou dans la demande de brevet EP95810372.3, au nom de la demanderesse.

Le capteur 50 est par exemple réalisé au moyen d'une plaquette de circuit imprimé sur laquelle les électrodes de capteur sont gravées. Il est également possible d'utiliser un substrat céramique. Une partie de l'électronique de traitement, non représentée sur cette figure, peut être placée directement sur cette plaquette. Dans une variante qui permet de réaliser des électrodes très fines et très précises, les électrodes du capteur peuvent être réalisées directement sur la surface d'un circuit intégré implémentant l'électronique de traitement.

Lorsque le capteur 50 est placé au-dessus de la règle 55, les deux électrodes d'émission 51 et 52 recouvrent plusieurs électrodes successives 56, 57 de la règle. De cette manière, le signal injecté sur les électrodes d'émission 51, 52 est transmis capacitivement aux électrodes de réception 56, 57 sous le capteur. Le signal ainsi récolté est directement transmis à la partie centrale des électrodes de règle 57 de type long. Ces portions centrales des électrodes 57 polarisent en retour les électrodes de réception 53 placées au-dessus, sur le capteur. Le couplage capacitif entre les électrodes 57 et 53 dépend de la surface de superposition, et donc de la position relative du capteur le long de la règle.

Lorsque le capteur se déplace, la capacité résultante entre les électrodes de la règle 57 et les N groupes d'électrodes de réception 53 varie de manière périodique en fonction de la variation de surface de superposition. Avec la disposition d'électrodes adoptée, la contribution des deux électrodes d'émission E0, E1 sur les électrodes de réception varie en opposition de phase: lorsque le couplage capacitif entre une électrode de réception 53 et la première électrode d'émission 51 croît, le couplage entre cette électrode 53 et la deuxième électrode d'émission 52 décroît de manière inversement proportionnelle. Les signaux émis E0 et E1 ont une polarité opposée; par conséquent, le signal R0-R7 reçu sur chaque électrode de réception provient en partie de E0 et en partie de E1 émis en opposition de phase. Cette disposition permet notamment de compenser le pivotement du capteur autour de son axe longitudinal.

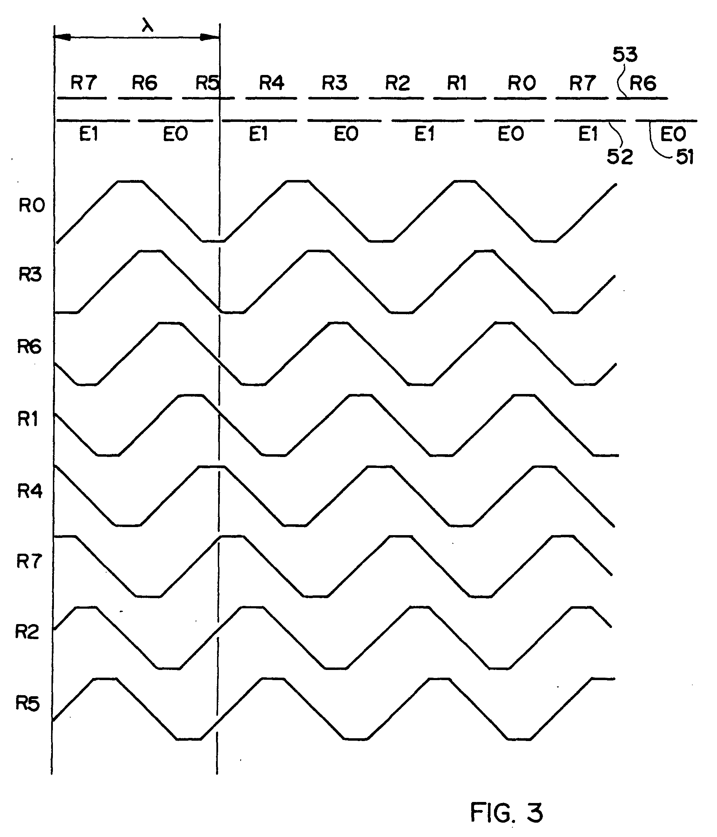

Dans une variante préférentielle, on utilise des signaux émis E0 et E1 de forme rectangulaire dont les flancs sont utilisés. Dans ce cas, l'amplitude des signaux R0 à R7 reçus sur les N groupes varie proportionnellement à la variation de capacité. La figure 3 représente cette variation des signaux R0 à R7 en fonction de la position du capteur 50.

En considérant les signaux R0 à R7 dans un ordre non séquentiel:

$$R(i+1) = [R(i) + 3] \text{ MOD } N \qquad \text{avec N=8 dans cet exemple}$$

ces signaux forment un système dans lequel la phase progresse régulièrement de 45° d'un groupe au suivant. Le système est périodique avec une période lambda égale à la largeur occupée par 2 électrodes de règle 57.

En revenant à la figure 1, le dispositif de l'invention comporte en outre un circuit de contrôle 10, un microcontrôleur 70 et un affichage à cristaux liquides 80. La fonction du circuit de contrôle 10 est essentiellement d'émettre les signaux E0 et E1 destinés aux électrodes d'émission 51 et 52, et d'analyser les signaux R0-R7 reçus sur les N=8 groupes d'électrodes de réception 53 de manière à déterminer un résultat numérique représentatif de la position du capteur. Le microcontrôleur 70 contrôle le fonctionnement du circuit 10, certaines fonctions annexes comme la mise en mode de veille (stand-by), et commande l'affichage LCD 80 sur lequel le résultat de mesure est affiché.

Le circuit de contrôle 10 comporte un générateur d'horloge 12 qui délivre toutes les fréquences nécessaires au fonctionnement interne du circuit ainsi qu'un signal d'horloge CK destiné au microcontrôleur 70. En outre, le générateur d'horloge génère les signaux E0 et E1 destinées aux électrodes d'émission du capteur 51 et 52. Comme indiqué ci-dessus, les signaux E0 et E1 sont constitués par des signaux rectangulaires en opposition de phase. Leur génération est donc très aisée; il est possible par exemple d'obtenir E1 simplement en plaçant un inverseur sur la ligne E0.

Selon une caractéristique de l'invention, le nombre de flancs des signaux E0, E1 générés par unité de temps est fonction de la vitesse de déplacement du capteur 50. Pour cela, le générateur d'horloge est relié au circuit de synchronisation 28, décrit plus bas. Le système de synchronisation fournit au générateur d'horloge 12 une information dépendant de la vitesse de déplacement du capteur. La fréquence des flancs générés est fonction de cette information: lorsque le capteur 50 se déplace rapidement, davantage de flancs sont générés que lorsqu'il reste immobile. Cette caractéristique profite des accélérations maximales limitées du système pour ne générer que le minimum de flancs nécessaires pour garder la position du capteur, et ainsi réduire la consommation d'énergie.

Dans une variante, la génération de flancs peut aussi être commandée par le microprocesseur 70 et dépendre par exemple de l'état des batteries du système, de la vitesse de lecture maximale désirée, etc...

Les signaux recueillis sur les électrodes de réception 53 du capteur 50 sont rassemblés en N=8 groupes de la manière décrite ci-dessus. Les 8 signaux R0-R7 correspondants sont fournis à l'entrée d'un sélecteur d'entrée 14 dans le circuit intégré 10.

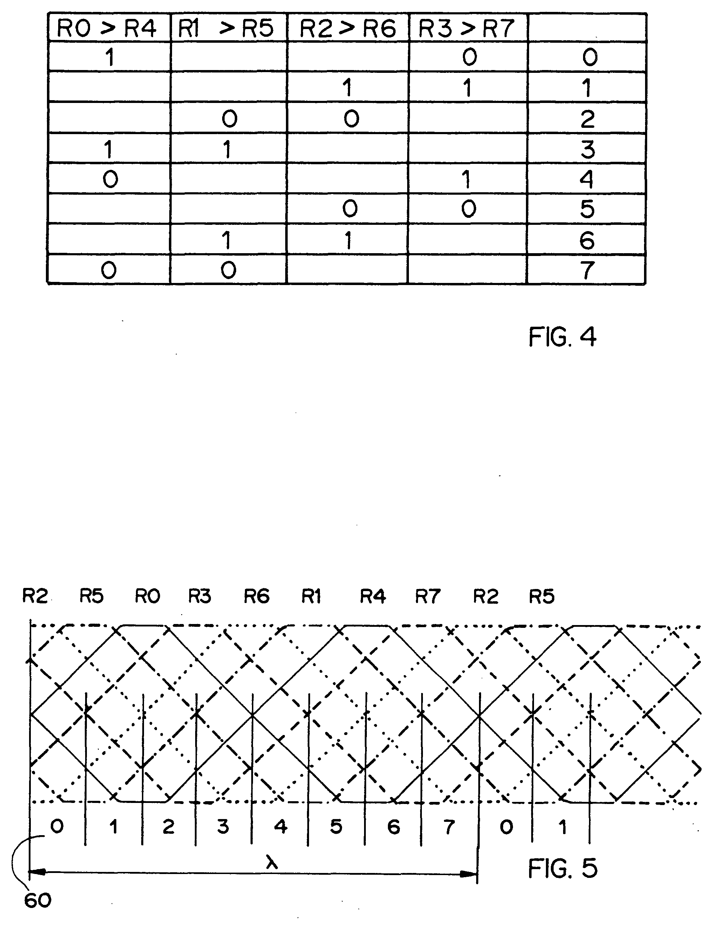

La figure 5 illustre en superposition la variation des signaux de réception R0-R7 en fonction de la position du capteur. Ce diagramme correspond aux huit diagrammes de la figure 3 superposés. La période de variation, identique pour les N=8 entrées, a été décomposée en N=8 zones de largeur identique, numérotées de 0 à 7. On voit que, dans chaque zone, seuls quatre canaux se trouvent dans leur position linéaire utilisable, les quatre autres canaux étant en saturation. En fonction des indications de zone fournies par le système de synchronisation 28, ou par le système primaire de comptage 20, le sélecteur d'entrée 14 sélectionne les quatre canaux utilisables et met les quatre autres canaux à la masse.

Le tableau ci-dessous indique les canaux à utiliser dans chaque zone:

| Zone | Canaux |
|------|--------|
| **0** | 0, 4, 7, 3 |

(suite)

| Zone | Canaux |
|------|--------|
| 1 | 3, 7, 2, 6 |
| 2 | 6, 2, 5, 1 |
| 3 | 1, 5, 0, 4 |
| 4 | 4, 0, 3, 7 |
| 5 | 7, 3, 6, 2 |
| 6 | 2, 6, 1, 5 |
| 7 | 5, 1, 4, 0 |

Si, comme dans cet exemple, le générateur d'horloge 12 envoie des signaux rectangulaires sur les électrodes d'émission 51, 52, le signal recueilli sur les électrodes 53 a la forme d'impulsions (charges sur les électrodes). Un amplificateur de charges 16 relié à la sortie du sélecteur 14 convertit ces charges en tensions.

Un comparateur 18 relié à la sortie de l'amplificateur de charges 16 compare entre eux les quatre canaux sélectionnés et détermine de cette manière trois bits indiquant la zone 60 dans laquelle se trouve le capteur. De manière générale, le nombre de bits ainsi déterminés est égal à $\log_2(N)$. La figure 4 est un tableau dont la dernière colonne indique le numéro de zone en fonction des comparaisons. Dans ce tableau, un 1 signifie que la comparaison indiquée dans l'en-tête de colonne est vérifiée. Les cases vides indiquent des comparaisons non effectuées, les canaux correspondants n'étant pas sélectionnés.

Le module primaire 20 utilise les résultats fournis par le comparateur 18 pour établir la zone 60 dans laquelle se trouve le capteur. Comme le système est périodique, les résultats du comparateur 18 se répètent dès que le capteur s'est déplacé d'une distance lambda. Pour lever cette ambiguïté, le système primaire 20 intègre un compteur (non représenté) qui compte par exemple les passages à zéro de l'un des signaux de mesure R0 à R7, en tenant compte du sens de déplacement, pour déterminer la position absolue du capteur.

Le module primaire 20 fournit à l'interface de sortie 30 14 bits indiquant la position du capteur 50 avec une précision de lambda / N. Les 11 bits de poids fort sont déterminés par le compteur; les 3 bits de poids faible indiquent la zone d'après les résultats du comparateur 18.

L'amplificateur de charges 16, le comparateur 18 et le module primaire 20 forment un ensemble désigné par la suite et dans les revendications comme système primaire de comptage 16, 18, 20.

Pour augmenter la précision, le système intègre en outre un système secondaire de précision constitué par les modules 22, 24 et 26. Afin de réduire la consommation, ce système n'est pas utilisé en permanence. Un signal de commande provenant du microcontrôleur 70 permet par exemple de débrancher le système secondaire de précision lorsque la précision fournie par le système primaire est momentanément suffisante. Dans une variante, le système secondaire de précision peut être débranché par le système de synchronisation 28 lorsque la vitesse de déplacement du capteur, déterminée par le système primaire de précision, dépasse un certain seuil.

Le système secondaire de précision permet de déterminer précisément la position du capteur à l'intérieur de la zone déterminée par le système primaire de comptage. Pour obtenir une précision optimale, les quatre canaux utilisables (loin de la saturation) sont utilisés dans chaque zone pour déterminer la position. Le signal correspondant à ces quatre canaux est amplifié par l'amplificateur de référence 22 et fourni à un élément de conversion analogiquenumérique 24.

La tension de référence qui alimente ce convertisseur 24 n'est pas fixe, mais provient de l'amplificateur de référence 22 et vaut:

$$a-b+c-d$$

En entrée, le convertisseur analogique numérique reçoit la tension a - b. De cette manière, la sortie du convertisseur 24 correspond à l'équivalent numérique de

$$r = \frac{a - b}{a - b + c - d}$$

Le tableau ci-dessous définit les canaux a, b, c, d à utiliser dans chaque zone:

| Zone | Canal a | Canal b | Canal c | Canal d |
|------|---------|---------|---------|---------|
| 0 | R0 | R4 | R7 | R3 |
| 1 | R3 | R7 | R2 | R6 |
| 2 | R6 | R2 | R5 | R1 |
| 3 | R1 | R5 | R0 | R4 |
| 4 | R4 | R0 | R3 | R7 |
| 5 | R7 | R3 | R6 | R2 |
| 6 | R2 | R6 | R1 | R5 |
| 7 | R5 | R1 | R4 | R0 |

On constate que, en début de chaque zone, la valeur des canaux a et b est identique alors que l'égalité des canaux c et d correspond à la fin de zone. Dans ces deux cas, l'expression ci-dessus devient:

$$r\ (a=b) = 0 \qquad \text{en début de zone}$$

et

$$r(c=d) = 1 \qquad \text{en fin de zone}$$

Cet algorithme présente les avantages suivants:

- compensation des erreurs d'amplitude: si tous les signaux sont atténués par un facteur k identique, le résultat reste inchangé.

- compensation des erreurs de pente.

- utilisation du maximum d'information à disposition dans chaque zone.

- évite toute opération de division (complexe à réaliser aussi bien en analogique qu'en numérique).

Dans l'exemple préférentiel de réalisation, le convertisseur 24 est un convertisseur fournissant 12 bits au module secondaire 26. Ces 12 bits sont ensuite fournis au système de synchronisation 28 et viennent augmenter considérablement la résolution du système de mesure.

Les données des modules primaires 20 et secondaires 26 sont fournies au système de synchronisation 28. Celui-ci veille en premier lieu à assurer la synchronisation entre le système primaire et le système secondaire, notamment lorsque le capteur change de zone. Il s'agit d'éviter dans ce cas des erreurs transitoires si par exemple le système primaire a déjà tenu compte du changement de zone, mais pas le système secondaire.

C'est donc le système de synchronisation 28 qui a le contrôle intégral des opérations et qui définit en chaque instant dans quelle zone se trouve le capteur. En fonction de cette zone, le système 28 commande au sélecteur d'entrée 14 de sélectionner les entrées appropriées.

Le système de synchronisation comporte en outre un module non représenté permettant de déterminer la vitesse momentanée de déplacement du capteur. Cette information est utilisée notamment pour commander le générateur d'horloge 12 afin de générer plus de flancs lorsque la vitesse de déplacement du capteur 50 est importante que lorsqu'il est immobile. En outre, cette information peut être utilisée pour éventuellement débrancher le système secondaire de précision au-delà d'une certaine vitesse de déplacement, ou après une certaine durée d'immobilité. Le but est bien entendu de réduire au minimum la consommation électrique du circuit.

Les quatorze bits provenant du système primaire et les douze bits provenant du système secondaire, réunis en un seul mot de 26 bits (fig. 5), sont fournis à l'interface de sortie 30. Cette interface transmet sous une forme appropriée ces 26 bits au microcontrôleur 70. Dans cet exemple, les 26 bits sont transmis sous forme pseudo-sérielle sur quatre lignes mixtes (données et adresses). Les signaux INT, LOAD et SYNC permettent de synchroniser les échanges de donnée entre le circuit de contrôle 10 et le microcontrôleur 70.

L'homme du métier comprendra que de nombreux éléments du dispositif indiqués peuvent être réalisés soit par logiciel, soit sous forme de circuit. Par exemple, certaines fonctions du systèmes secondaire de précision pourraient être réalisées par voie logicielle par le microcontrôleur 70. Toutefois, l'intégration du système secondaire dans le circuit 10 permet d'utiliser un microcontrôleur 70 très simple, donc économique et à faible consommation. D'autre part, comme mentionné ci-dessus, le système secondaire 22, 24, 26 intégré peut être débranché lorsque les bits supplémentaires qu'il fournit ne sont pas utiles ou pas significatifs, ce qui permet de réduire la consommation électrique.

En outre, il va de soi que le nombre N de groupes peut être différent de 8, par exemple 6, 10 ou 12. Dans ce cas, il sera naturellement nécessaire d'adapter en conséquence les tableaux indiqués à titre d'exemple dans cette description et dans les figures.

**Revendications**

**1.** Dispositif de mesure de dimension capacitif comprenant:

une règle (55) munie d'un réseau d'électrodes de règles (56,57), arrangées sensiblement parallèlement, les unes à côté des autres,

un capteur (50) apte à se déplacer parallèlement face à la règle (55) et muni de deux électrodes d'émission (51, 52) et de n électrodes de réception (53), lesdites électrodes de règle (56, 57) étant chacune couplée capacitivement à l'une des deux électrodes d'émission (51, 52), ledit réseau d'électrodes de règle (56, 57) étant de plus conformé de manière à ce qu'une partie dudit réseau soit face auxdites électrodes de réception (53) de manière à ce que chacune desdites électrodes de réception (53) soit couplée capacitivement avec au moins une des électrodes de règle (57), le couplage entre les électrodes de règle (57) et les électrodes de réception (53) dépendant de la position du capteur,

les n électrodes de réception (53) étant reliées électriquement de manière à former N groupes d'électrodes reliées entre elles, N étant un entier supérieur ou égal à deux, un générateur (12) injectant deux signaux d'émission (E0, E1) en opposition de phase sur les deux électrodes d'émission (51, 52),

des moyens d'analyse (16, 18, 20, 22, 24, 26, 28) déterminant à l'aide de signaux (R0-R7) reçus sur lesdits N groupes d'électrodes de réception (53) un résultat numérique représentatif de la position du capteur le long de la règle,

**caractérisé en ce que**, dans ladite partie du réseau d'électrodes de règle (56, 57) qui fait face aux électrodes de réception (53), deux électrodes voisines selon la direction longitudinale de la règle sont couplées à deux électrodes d'émission (51, 52) différentes.

**2.** Dispositif selon la revendication précédente, **caractérisé en ce que** la fréquence des signaux d'émission (E0, E1) générés par ledit générateur (12) dépend de la vitesse de déplacement du capteur (50).

**3.** Dispositif selon l'une des revendications précédentes, **caractérisé en ce que** lesdits moyens d'analyse (16, 18, 20, 22, 24, 26, 28) comportent un système primaire de comptage (16, 18, 20) fournissant les bits de poids fort du résultat numérique à l'aide d'un premier algorithme et un système secondaire de précision (22, 24, 26) fournissant les bits de poids faibles du résultat numérique à l'aide d'un deuxième algorithme.

**4.** Dispositif selon la revendication précédente, **caractérisé en ce que** le système primaire de comptage (16, 18, 20) intègre un compteur comptant les passages à zéro d'un au moins des signaux de mesure (R0-R7) pour déterminer les bits de poids fort du résultat numérique, la résolution fournie par lesdits bits de poids fort correspondant au pas (lambda) des électrodes de règle (56, 57).

**5.** Dispositif selon la revendication 3 ou 4, **caractérisé en ce que** le système primaire de comptage (16, 18, 20) intègre des moyens de comparaison (18) permettant de comparer entre eux les signaux de mesure (R0-R7) afin de déterminer les bits de poids intermédiaire du résultat numérique, la résolution fournie par lesdits bits de poids intermédiaire correspondant à une zone (60) de largeur égale au pas (lambda) des électrodes de règle (56, 57) divisé par N.

**6.** Dispositif selon la revendication précédente, **caractérisé en ce que** ledit système secondaire de précision (22, 24, 26) détermine les bits de poids faible du résultat en évaluant l'expression

$$\frac{a - b}{a - b + c - d}$$

dans laquelle a et b correspondent aux valeurs prises par deux signaux de mesure (R0-R7) choisis tels que a=b au début de ladite zone déterminée par le système primaire de comptage, et c et d aux valeurs prises par deux signaux de mesure différents de a et b et choisis tels que c=d à la fin de ladite zone, les quatres signaux a, b, c, d choisis étant choisis tels qu'ils se trouvent dans leur zone linéaire dans toute ladite zone.

7. Dispositif selon l'une des revendications 3 à 6, **caractérisé en ce que** ledit système secondaire de précision (22, 24, 26) peut être désactivé par exemple lorsque la vitesse de déplacement du capteur (50) dépasse un seuil prédéterminé.

8. Dispositif selon la revendication précédente, **caractérisé en ce qu'**il comporte un sélecteur d'entrée (14) permettant de sélectionner, en fonction de l'état du système primaire de comptage (16, 18, 20), un sous-ensemble de signaux parmi les N signaux de mesure (R0-R7).

**Patentansprüche**

1. Kapazitive Grössenmessvorrichtung enthaltend
   einen Massstab (55), der mit einem Netz von im wesentlichen parallel nebeneinander angeordneten Massstabelektroden (56, 57) ausgerüstet ist,
   einen Erfasser (50), der geeignet ist, sich gegenüber dem Massstab (55) parallel zu verschieben und der mit zwei Sendeelektroden (51, 52) und n Empfangselektroden (53) ausgerüstet ist, wobei jede der genannten Massstabelektroden (56, 57) kapazitiv an eine der zwei Sendeelektroden (51, 52) gekoppelt ist, wobei das genannte Netz von Massstabelektroden (56, 57) zudem so gestaltet ist, dass ein Teil des genannten Netzes sich derart gegenüber den genannten Empfangselektroden (53) befindet, dass jede der genannten Empfangselektroden (53) kapazitiv mit mindestens einer der Massstabelektroden (57) gekoppelt ist, wobei die Kopplung zwischen den Massstabelektroden (57) und den Empfangselektroden (53) von der Position des Erfassers abhängig ist,
   wobei die n Empfangselektroden (53) derart elektrisch verbunden sind, dass sie N Gruppen von Elektroden bilden, die unter sich verbunden sind, wobei N eine ganze Zahl grösser oder gleich zwei ist,
   einen Generator (12), der zwei Sendesignale (E0, E1) in Gegenphase auf die zwei Sendeelektroden (51, 52) bringt,
   Analysemittel (16, 18, 20, 22, 24, 26, 28), die mit Hilfe der auf den genannten N Gruppen von Empfangselektroden (53) erhaltenen Signale (R0-R7) ein numerisches Resultat bestimmen, das für die Position des Erfassers entlang dem Massstab repräsentativ ist,
   **dadurch gekennzeichnet, dass** im genannten Teil des Netzes von Massstabelektroden (56, 57), der den Empfangselektroden (53) gegenüber liegt, zwei in der Längsrichtung des Massstabs benachbarte Elektroden mit zwei verschiedenen Sendeelektroden (51, 52) gekoppelt sind.

2. Vorrichtung nach dem vorangehenden Anspruch, **dadurch gekennzeichnet, dass** die Frequenz der durch den genannten Generator (12) erzeugten Sendesignale (E0, E1) von der Verschiebegeschwindigkeit des Erfassers (50) abhängt.

3. Vorrichtung nach einem der vorangehenden Ansprüche, **dadurch gekennzeichnet, dass** die genannten Analysemittel (16, 18, 20, 22, 24, 26, 28) ein primäres Zählsystem (16, 18, 20) enthalten, das mit Hilfe eines ersten Algorithmus die Bits mit starkem Gewicht des numerischen Resultats liefert und ein sekundäres Präzisionssystem (22, 24, 26), das mit Hilfe eines zweiten Algorithmus die Bits mit schwachem Gewicht des numerischen Resultats liefert.

4. Vorrichtung nach dem vorangehenden Anspruch, **dadurch gekennzeichnet, dass** das primäre Zählsystem (16, 18, 20) einen Zähler einschliesst, der die Nulldurchgänge mindestens eines der Messsignale (R0-R7) zählt, um die Bits mit starkem Gewicht des numerischen Resultats zu bestimmen, wobei die durch die genannten Bits mit starkem Gewicht gelieferte Lösung dem Schritt (Lambda) der Massstabelektroden (56, 57) entspricht.

5. Vorrichtung nach Anspruch 3 oder 4, **dadurch gekennzeichnet, dass** das primäre Zählsystem (16, 18, 20) Vergleichsmittel (18) einschliesst, die erlauben, die Messsignale (R0-R7) unter sich zu vergleichen, um die Bits mit mittlerem Gewicht des numerischen Resultats zu bestimmen, wobei die durch die genannten Bits mit mittlerem Gewicht gelieferte Lösung einer Zone (60) mit einer Breite entspricht, die gleich dem Schritt (Lambda) der Massstabelektroden (56, 57) dividiert durch N ist.

6. Vorrichtung nach dem vorangehenden Anspruch, **dadurch gekennzeichnet, dass** das sekundäre Präzisionssystem (22, 24, 26) die Bits mit schwachem Gewicht des Resultats bestimmt durch Auswerten des Ausdrucks

$$\frac{a-b}{a-b+c-d'}$$

in welchem a und b den Werten entsprechen, die durch zwei Messsignale (R0-R7) genommen werden, die so gewählt werden, dass a=b am Anfang der genannten durch das primäre Zählsystem bestimmten Zone, und c und d den Werten, die durch zwei verschiedene Messsignale von a und b genommen werden und so gewählt sind, dass c=d am Ende der genannten Zone, wobei die vier gewählten Signale a, b, c, d so gewählt sind, dass sie sich in der ganzen genannten Zone in ihrer linearen Zone befinden.

7. Vorrichtung nach einem der Ansprüche 3 bis 6, **dadurch gekennzeichnet, dass** das genannte sekundäre Präzisionssystem (22, 24, 26) deaktiviert werden kann, beispielsweise wenn die Verschiebegeschwindigkeit des Erfassers (50) eine vorbestimmte Schwelle überschreitet.

8. Vorrichtung nach dem vorangehenden Anspruch, **dadurch gekennzeichnet, dass** sie einen Eintrittswähler (14) enthält, der erlaubt, in Funktion des Zustands des primären Zählsystems (16, 18, 20) eine Untermenge von Signalen unter den N Messsignalen (R0-R7) zu wählen.

**Claims**

1. Capacitive device for measuring dimension comprising:

   - a scale (55) equipped with an array of scale electrodes (56, 57),
   - a transducer (50) able to be displaced parallel to and facing the scale (55) and equipped with two emitting electrodes (51, 52) and with n receiving electrodes (53), the said scale electrodes (56, 57) each being capacitively coupled to one of the two emitting electrodes (51, 52), the said array of scale electrodes (56, 57) being moreover configured in such a way that one part of the said array is facing the said receiving electrodes (53) such that each of the said receiving electrodes (53) is coupled capacitively with at least one of the scale electrodes (57), the coupling between the scale electrodes (57) and the receiving electrodes (53) depending upon the position of the transducer,
   - the n receiving electrodes (53) being connected electrically in such a way as to form N groups of mutually connected electrodes, N being an integer greater or equal to two,
   - a generator generating (12) two emission signals (E0, E1) in phase opposition on the two emitting electrodes (51, 52),
   - processing means (16, 18, 20, 22, 24, 26, 28) determining with the aid of signals (R0-R7) received on the said N groups of receiving electrodes (53) a numerical result representing the position of the transducer along the scale,

   **characterised in that** in the said part of the array of scale electrodes (56, 57) which face the receiving electrodes (53), two adjacent electrodes along the longitudinal direction of the scale are coupled to two different emitting electrodes (51, 52).

2. Device according to the preceding claim, **characterised in that** the frequency of emission signals (E0, E1) generated by the said generator (12) depends upon the speed of displacement of the transducer (50).

3. Device according to one of the preceding claims, **characterised in that** the said processing means (16, 18, 20, 22, 24, 26, 28) comprise a primary counting system (16, 18, 20) providing the high order bits of the numerical result with the aid of a first algorithm and a second precision system (22, 24, 26) providing the low order bits of the numerical result with the aid of a second algorithm.

4. Device according to the preceding claim, **characterised in that** the primary counting system (16, 18, 20) incorporates a counter counting the crossovers to zero of at least one of the measuring signals (R0-R7) to determine the high order bits of the numerical result, the resolution provided by the said high order bits corresponding to the pitch (lamba) of the scale electrodes (56, 57).

5. Device according to claim 3 or 4, **characterised in that** the primary counting system (16, 18, 20) incorporates means of comparison (18) permitting the measurement signals (R0-R7) to be compared to one another in order to determine the intermediate order bits of the numerical result, the resolution provided by the said intermediate order bits corresponding to a zone (60) of width equal to the pitch (lamba) of the scale electrodes (56, 57) divided by N.

6. Device according to the preceding claim, **characterised in that** the said secondary precision system (22, 24, 26) determines the low order bits of the result by evaluating the expression

$$\frac{a - b}{a - b + c - d}$$

in which a and b correspond to values taken by two measuring signals (r0-R7) chosen such that a = b at the beginning of the said zone determined by the primary counting system, and c and d to values taken by two measuring signals different from a and b and chosen such that c = d at the beginning of the said zone, the four chosen signals a, b, c, d being chosen such that they are in their linear region in the entire said zone.

7. Device according to one of the claims 3 to 6, **characterised in that** the said secondary precision system (22, 24, 26) can be deactivated, for example when the speed of displacement of the transducer (50) surpasses a predetermined threshold.

8. Device according to the preceding claim, **characterised in that** it comprises an input selector (14) allowing selection of a sub-set of signals from among the N measuring signals (R0-R7) as a function of the state of the primary counting system (16, 18, 20).

FIG. 1

FIG. 2A

FIG. 2B

FIG. 3

| R0 > R4 | R1 > R5 | R2 > R6 | R3 > R7 | |
|---------|---------|---------|---------|---|
| 1 | | | 0 | 0 |
| | | 1 | 1 | 1 |
| | 0 | 0 | | 2 |
| 1 | 1 | | | 3 |
| 0 | | | 1 | 4 |
| | | 0 | 0 | 5 |
| | 1 | 1 | | 6 |
| 0 | 0 | | | 7 |

FIG. 4

R2   R5   R0   R3   R6   R1   R4   R7   R2   R5

0   1   2   3   4   5   6   7   0   1

$\lambda$

FIG. 5

60